# EUROPEAN PATENT SPECIFICATION

(11) **EP 2 715 628 B1**
(45) Date of publication and mention of the grant of the patent: **20.04.2016**
(21) Application number: 12724728.6
(22) Date of filing: 08.05.2012
(51) Int. Cl.: G06Q 10/06, G07C 1/10

(54) **CONTROL DEVICE FOR RESOURCE ALLOCATION**
STEUERUNGSVORRICHTUNG FÜR RESSOURCENZUWEISUNG
DISPOSITIF DE COMMANDE POUR UNE ATTRIBUTION DE RESSOURCE

(30) Priority: 26.05.2011 EP 11167669
(43) Date of publication of application: 09.04.2014
(73) Proprietor: Koninklijke Philips N.V., 5656 AE Eindhoven (NL)
(72) Inventor: MASON, Jonathan David, NL-5656 AE Eindhoven (NL); ALIAKSEYEU, Dzmitry Viktorovich, NL-5656 AE Eindhoven (NL); ENGELEN, Dirk Valentinus René, NL-5656 AE Eindhoven (NL); WEDA, Johannes, NL-5656 AE Eindhoven (NL); HOUSSIAN, Aaron Robert, NL-5656 AE Eindhoven (NL)
(74) Representative: van Eeuwijk, Alexander Henricus Waltherus
(86) International application number: PCT/IB2012/052281
(87) International publication number: WO 2012/160467

(56) References cited:
- US-A1- 2006 161 469
- US-A1- 2008 109 289
- US-A1- 2009 049 005
- US-A1- 2009 193 217
- Kevin O'donnell ET AL: "Connected Real Estate", , 1 January 2007 (2007-01-01), XP55032215, Retrieved from the Internet: URL:http://www.cisco.com/web/about/ac79/do cs/wp/ctd/ConnectedRealEstate.pdf [retrieved on 2012-07-09]
- Stephen Conner ET AL: "Workplace Applications of Sensor Networks", , 1 July 2004 (2004-07-01), XP55032138, Retrieved from the Internet: URL:http://www.isi.edu/~johnh/PAPERS/Conne r04a.pdf [retrieved on 2012-07-09]

## Description

### FIELD OF THE INVENTION

The present invention relates in general to a control device and in particular to a control device, a method and a computer program product for providing a recommendation for at least one physical environment for an activity and for providing a recommendation for at least one activity in a physical environment.

### BACKGROUND OF THE INVENTION

More and more open plan office workspaces are currently being deployed. Also, flexible workspaces where workers (such as employees and users) do not have their own office or dedicated workstation are getting more common. In such physical environments workers must find a suitable location to work each day. Some companies are already practicing this way of working.

In such physical environments workers are often disturbed by other workers. Further, everyday it may take some time for each worker to find a suitable location to work. Also, depending on certain criteria, each worker may favor different locations ranging from dark and enclosed to bright and open, which may or may not be provided with task lights, spots, cocoon areas, etc.

The choice of location (i.e. physical environment) often depends on the type of work that is to be undertaken. For example, for reading documents it may be desirable to work in a quiet location with spot lighting. E-mails may be read while chatting with colleagues; writing activities or sorting out files are preferably performed in a bright but quiet location; projects on which people work in teams are preferably performed in a large meeting area. Thus, each activity may impose different demands on the location.

US 2009/049005 A1 discloses a method and system for customizing a data logging and analysis program. The method includes connecting environmental sensors to a computer or other data collecting device and accessing a workflow customization interface that allows a user to select a customized workflow or optionally to customize a data collection program by selecting at least one action.

US 2009/193217 A1 relates to transparent and/or non-disruptive systems and methods for monitoring and analyzing actual space utilization, and in particular, analyzing space utilization over time and/or in real time to accurately understand and report the utilization of the space.

US 2008/109289 A1 discloses a system and method for measuring the actual use of real estate space, overall and by individual, in a variety of corporate real estate environments in order to facilitate the maximization of return on real estate and resource investments, optimize the efficiency of workspaces, automate the reservation and scheduling of workspaces, equipment and services, optimize tele-work and mobile work strategies, and report on space utilization and plan for future needs.

### SUMMARY OF THE INVENTION

It is therefore an object of the present invention to overcome these problems and provide means for giving a recommendation for at least one physical environment for an activity.

According to a first aspect of the invention, these and other objects are achieved by means of a control device for providing an indication of suitability of at least one physical environment for an activity, based on at least one tangible and at least one intangible aspect of the at least one physical environment and the activity, wherein the at least one tangible aspect relates to infrastructure elements and the at least one intangible aspect relates to an atmosphere, which control device is arranged to receive user input relating to an activity, the activity represented by settings pertaining to at least one tangible and at least one intangible aspect thereof, access historical sensor data related to the at least one physical environment, the historical sensor data comprising historical sensor data related to at least one intangible aspect from at least one sensor associated with the at least one physical environment and historical presence and/or status data related to at least one tangible aspect associated with the at least one physical environment, to create a time line of sensor measurements for the at least one physical environment, receive current sensor data related to the at least one physical environment, the current sensor data comprising current sensor data related to at least one intangible aspect from the at least one sensor associated with the at least one physical environment and current presence and/or status data related to at least one tangible aspect associated with the at least one physical environment, to create a snapshot of sensor measurements for the at least one physical environment, predict, by combining the time line of sensor measurements with the snapshot of sensor measurements and extrapolating the combined historical sensor data and the snapshot of sensor measurements to the future, future environmental conditions for the at least one physical environment, correlate the predicted future environmental conditions with data pertaining to the at least one tangible and the at least one intangible aspect of the activity and provide a result of the correlation to a user interface so as to provide the indication of suitability of the at least one physical environment for the activity. According to a second aspect of the invention, the above and other objects are achieved by means of a control device for providing an indication of suitability of at least one activity in a physical environment, based on at least one tangible and at least one intangible aspect of the at least one activity and the at least one environment, wherein the at least one tangible aspect relates to infrastructure elements and the at least one intangible aspect relates to an atmosphere, which control device is arranged to receive user input relating to a physical environment, access historical sensor data related to the at least one physical environment, the historical sensor data comprising historical sensor data related to at least one intangible aspect from at least one sensor associated with the physical environment and historical presence and/or status data related to at least one tangible aspect associated with the at least one physical environment, to create a time line of sensor measurements for the physical environment, receive current sensor data related to the at least one physical environment, the current sensor data comprising current sensor data related to at least one intangible aspect from the at least one sensor associated with the physical environment and current presence and/or status data related to at least one tangible aspect associated with the at least one physical environment, to create a snapshot of sensor measurements for the physical environment, predict, by combining the time line of sensor measurements with the snapshot of sensor measurements and extrapolating the combined historical sensor data and the snapshot of sensor measurements to the future, future environmental conditions for the physical environment, correlate the predicted future environmental conditions with data pertaining to at least one tangible and at least one intangible aspect of at least one activity and provide a result of the correlation to a user interface so as to provide the indication of suitability of the at least one activity in the physical environment.

The control device may thus enable efficient resource allocation and management by taking into account previous and current sensor data.

The user interface may be an integrated part of the control device. This may advantageously result in a compact control device.

The control device may be a mobile phone. The control device may thus be embodied as a (personal and) portable device.

The presence and/or status data may be indicative of a presence and/or status of a lighting infrastructure, an audio output device, a visual output device, a scent producing device, an air conditioning device, an air filtration device and/or a sound masking/dampening device, and the at least one sensor data may be indicative of noise level, audio level, light level, temperature, air quality, humidity, and/or air conditioning level.

The control device may further be arranged to receive manually inputted user input relating to the physical environment and/or the data pertaining to the at least one activity.

The control device may further be arranged to store the snapshot of sensor measurements for the physical environment in an environment profile. The control device may further be arranged to access the at least one stored environment profile and compare the at least one stored environment profile with a snapshot of sensor measurements for a current physical environment.

The data pertaining to at least one activity may be associated with at least one calendar item. The at least one calendar item may be an appointment item, meeting item, or event item. The calendar may be a Microsoft Outlook calendar, a Google calendar, or the like. The control device may further be arranged to access data associated with at least one further calendar item, and to provide an indication of the at least one further calendar item to the user interface.

According to a third aspect of the invention, the above and other objects are achieved by means of a method of an indication of suitability of at least one physical environment for an activity, based on at least one tangible and at least one intangible aspect of the at least one physical environment and the activity, wherein the at least one tangible aspect relates to infrastructure elements and the at least one intangible aspect relates to an atmosphere, the method comprising receiving user input relating to an activity, the activity represented by settings pertaining to at least one tangible and at least one intangible aspect thereof, accessing historical sensor data related to the at least one physical environment, the historical sensor data comprising historical sensor data related to at least one intangible aspect from at least one sensor associated with the at least one physical environment and historical presence and/or status data related to at least one tangible aspect associated with the at least one physical environment, to create a time line of sensor measurements for the at least one physical environment, receiving current sensor data related to the at least one physical environment, the current sensor data comprising current sensor data related to at least one intangible aspect from the at least one sensor associated with the at least one physical environment and current presence and/or status data related to at least one tangible aspect associated with the at least one physical environment, to create a snapshot of sensor measurements for the at least one physical environment, predicting, by combining the time line of sensor measurements with the snapshot of sensor measurements and extrapolating the combined historical sensor data and the snapshot of sensor measurements to the future, future environmental conditions for the at least one physical environment, correlating the predicted future environmental conditions with data pertaining to the at least one tangible and at least one intangible aspect of the activity and providing a result of the correlation to a user interface so as to provide the indication of suitability of the at least one physical environment for the activity.

According to a fourth aspect of the invention, the above and other objects are achieved by means of a method of providing an indication of suitability of at least one activity in a physical environment, based on at least one tangible and at least one intangible aspect of the at least one activity and the at least one environment, wherein the at least one tangible aspect relates to infrastructure elements and the at least one intangible aspect relates to an atmosphere, the method comprising receiving user input relating to a physical environment, accessing historical sensor data related to the at least one physical environment, the historical sensor data comprising historical sensor data related to at least one intangible aspect from at least one sensor associated with the physical environment and historical presence and/or status data related to at least one tangible aspect associated with the at least one physical environment, to create a time line of sensor measurements for the physical environment, receiving current sensor data related to the at least one physical environment, the current sensor data comprising current sensor data related to at least one intangible aspect from the at least one sensor associated with the physical environment and current presence and/or status data related to at least one tangible aspect associated with the at least one physical environment, to create a snapshot of sensor measurements for the physical environment, predicting, by combining the time line of sensor measurements with the snapshot of sensor measurements and extrapolating the combined historical sensor data and the snapshot of sensor measurements to the future, future environmental conditions for the physical environment, correlating the predicted future environmental conditions with data pertaining to at least one tangible and at least one intangible aspect of at least one activity and providing a result of the correlation to a user interface so as to provide the indication of suitability of the at least one activity in the physical environment.

According to a fifth aspect of the invention, the above and other objects are achieved by means of a computer program product stored on a non-volatile storage medium and comprising software instructions which, when executed on a processor, cause the processor to perform a method as disclosed above.

The disclosed embodiments thus provide means for people working in flexible office environments to locate easily spaces which suit their needs for the current work task. A suitability rating can be generated in real time by using historical data mined from embedded sensors in the offices in conjunction with a user's preferences as to how he would like a location to be, for example by indicating an activity to be performed. This enables employees to find locations which can suit not only their tangible needs (i.e. luminaires, lighting infrastructure, furniture, equipment, windows etc.) but also their intangible and personal needs (i.e. temperature, artificial and natural light level, busyness, noise levels, humidity, temperature, activity, air quality etc.). The disclosed embodiments thus provide means to understand the past, the present and the predicted future of an environment (tangible aspects) and the atmosphere (intangible aspects). The disclosed embodiments will thus enable employees working in flexible office spaces to decide whether a location is suitable for their needs, based on rational and real information rather than a quick, subjective judgment as is the case at this moment in time.

It is noted that the invention relates to all possible combinations of features recited in the claims.

### BRIEF DESCRIPTION OF THE DRAWINGS

These and other aspects of the present invention will now be described in more detail with reference to the appended drawings showing embodiment(s) of the invention, in which
Figs. 1-2 illustrate functional block diagrams of systems according to embodiments;
Fig. 3 illustrates a user interface of a control device according to embodiments; and
Figs. 4-5 are flowcharts of methods according to embodiments.

### DETAILED DESCRIPTION OF THE EMBODIMENTS

The present invention will now be described more fully with reference to the accompanying drawings, in which currently preferred embodiments of the invention are shown. The invention may, however, be embodied in many different forms and should not be construed as limited to the embodiments set forth herein; rather, these embodiments are provided for thoroughness and completeness, and fully convey the scope of the invention to the person skilled in the art. Like reference characters refer to like elements throughout.

The present invention will be described in the context of an activity which is to be performed in one physical environment selected from a plurality of different physical environments so as to estimate the correlation between the activity and the physical environment(s). In turn, each physical environment may be associated with a plurality of different settings and measurements. These settings and measurements may be used when performing the correlation. The settings and measurements may be sensed or measured by a plurality of sensors.

Such a plurality of physical environments may represent a scenario where different types of workplaces, such as open plan office workspaces, are deployed in a single workplace, and where each type of workplace corresponds to one type of physical environment. When persons working in such a workplace arrive at the building where they work, their first task of the day commonly is to find and select a suitable place to work, depending on the kind of work to be performed, i.e. the activity that is to be performed. If a first location is selected and it is later discovered that the selected location is not suitable for the work to be performed (e.g. the location is too noisy, too busy, too dark, too bright, too hot, etc.), the worker could be forced to pack up his/her things and start searching for another, more suitable second location. This process could represent a major impediment to an employee's performance, since working conditions can seriously affect concentration and productivity. Being able to find a good place to work (i.e. to find a suitable physical environment for a certain activity) straight away will save the employee time and effort and will reduce office stress and frustration. The indication that the location is too noisy, too busy, too dark, too bright, too hot, and the like, may be reflected by values of parameters stored in a matrix (or vector) relating to measurements and/or settings of sensors and/or actuators in each respective physical environment. Herein are disclosed means to ease and smoothen the process of finding a good place to work that suits an employee's individual needs and desires.

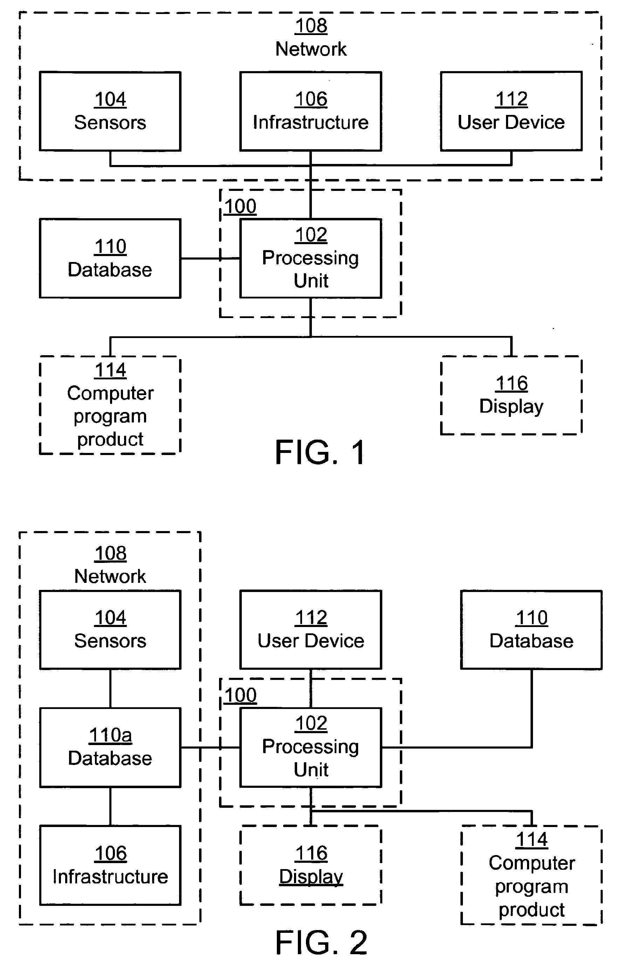

Fig. 1 illustrates, by way of a number of functional blocks, a system according to embodiments of the present invention. The system comprises a plurality of sensors 104 which may further comprise, or be operatively coupled to, actuators. The plurality of sensors 104 are arranged to sense data from the physical environment in which they are located and to (locally) store the sensed data. The sensors 104 may thus constantly mine data from the location where they are present. The sensors 104 may typically be light sensors arranged to sense light levels, audio sensors arranged to sense audio and/or noise levels, temperature sensors arranged to sense temperature, humidity sensors arranged to sense humidity, air quality sensors arranged to sense air quality, image sensors arranged to sense photographic or infrared images and the like, and hence the sensed data may correspond thereto. The system typically comprises a plurality of sensors 104 of such different types.

The system further comprises a plurality of infrastructure elements 106 representing further actuators and devices producing output. The infrastructure elements 106 may thus represent lighting infrastructures, audio outputs, visual outputs, scent, air conditioning control, air filtration, sound masking/dampening etc. These actuators and output devices may also broadcast their presence and status in any given environment.

The plurality of sensors 104 and the plurality of infrastructure elements 106 may be part of, or operatively coupled to, a network 108. The network 108 may be an internal network (intranet) or part of an external network (internet). The network 108 may thus be used by the plurality of sensors 104 and the plurality of infrastructure elements 106 to broadcast their presence, status, and/or produced data to other devices.

Within the physical environments in which data is sensed and processed by the plurality of sensors 104 and the plurality of infrastructure elements 106, people will be present much of the time and thus will also influence and provide data for the sensors to mine. Particularly, people may be able to provide personal information to the system relating to their current physiological and biological situation (sleepy, tired, energized, happy, etc) and/or to provide pre-programmed information stored on (personal) user devices 112 operatively coupled to the network 108. Such pre-programmed information may *inter alia* relate to working schedules, appointments, and preferences.

As will be discussed in more detail below, data from the plurality of sensors 104, the infrastructure elements 106 and the user devices 112 may be useful, so that people can find out whether a location can physically meet their needs or desires. The data from the plurality of sensors 104, the infrastructure elements 106 and the user devices 112 may be (wirelessly) transmitted through the network 108 to a device which has authorization to receive the sensed data.

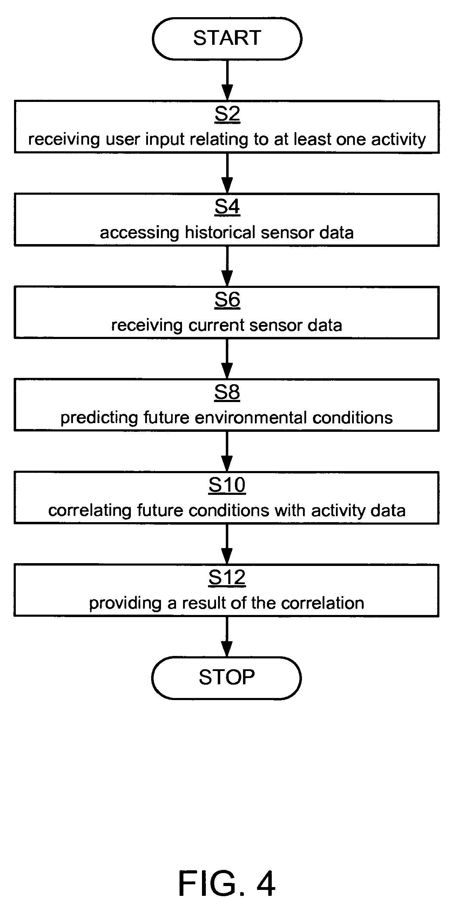

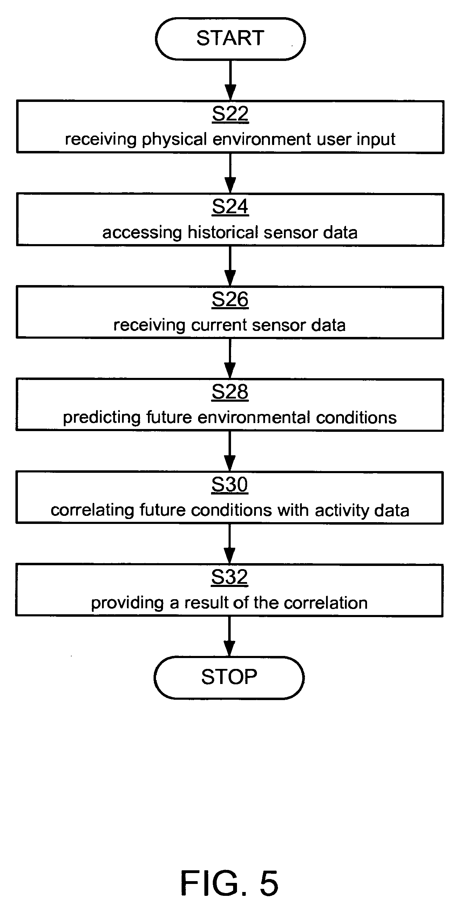

Particularly, the sensed data may be received by a control device 100 which preferably comprises a processing unit 102. The control device 100 may be a central server device or a personal device, such as a mobile phone. The streams of data received from the plurality of sensors 104, the infrastructure elements 106 and/or the user devices 112 may thus be monitored and analyzed by the processing unit 102 of the central or individual control device 100. The control device 100 may in particular be arranged for providing a recommendation for at least one physical environment for a given specific activity. Likewise, the control device 100 may in particular be arranged for providing a recommendation for at least one activity in a given specific physical environment. In order to do so, the control device 100 (particularly the processing unit 102 thereof) needs to be arranged so as to perform a number of functionalities. These functionalities will now be described with reference to the flowcharts illustrated in Figs. 4 and 5. The functionalities may be hardwired in the (processing unit 102 of the) control device 100. Alternatively, the (processing unit 102 of the) control device 100 may access a computer program product (114) which comprises software instructions. When the software instructions are executed on the processing unit 114, this causes the processing unit 114 to perform the functionality. The software instructions may be stored on a non-volatile storage medium which may be an integral part of, or operatively coupled to, the control device 100.

The control device 100 may receive user input relating to at least one activity, step S2. The activity may correspond to an activity that a user is to perform. Typical activities include, but are not limited to, reading documents, reading/writing E-mails, writing or sorting out files, having a person-to-person meeting, working on a project in a team. The received activity may be stored as a matrix (or vector) in the control device 100, wherein the values of the elements of the matrix (or vector) reflect the received activity. Thus, different activities may be distinguished through the matrix (or vector) values. For example, each activity (such as reading documents, reading/writing E-mails, writing or sorting out files, having a person-to-person meeting, working on a project in a team) may be reflected by one or more elements of the matrix (or vector).

The data pertaining to at least one activity may be associated with at least one calendar item. The at least one calendar item may be an appointment item, meeting item, or event. The control device may be further arranged to access data associated with at least one further calendar item, and to provide an indication of the at least one further calendar item to the user interface. Thus, the user may see ongoing and future planned activities for the physical environment.

The control device 100 may also use input relating to a particular physical environment, step S22. The physical environment may correspond to a location where a user is to perform an activity. Typical physical environments include, but are not limited to, workplaces with a fixed number of workspaces in an open plan office, meeting rooms, personal offices. The physical environment may also relate to fixtures and furniture. Information regarding the physical environment may be received in the form of manual user input. Thus, a user may specify a particular physical environment in which he/she is to perform an activity. Properties of each physical environment may be stored as values in a matrix (or vector).

Upon reception of the at least one activity or the physical environment, the (processing unit 102 of the) control device 100 may record a timeline of sensor activity or a history of the states of (different) physical environments. This can provide historical information with respect to how a physical environment has been used and the type of activities that have taken place in the physical environment. Particularly, for this purpose, the (processing unit 102 of the) control device 100 accesses historical sensor data from at least one sensor 104 associated with the physical environment, step S4, S24. As a result, the control device 100 creates a (virtual) time line of sensor measurements for the physical environment. The processing unit 102 may then monitor and interpret them and provide feedback information in a meaningful way to users when they need it. The accessed historical sensor data may be stored in a database 110. The database 110 may be part of the control device 100 or it may be operatively coupled to the control device 100.

Further, the control device 100 may maintain an up to date snapshot of the current environmental situation of the particular locations concerned. Particularly, for this purpose, the control device 100 receives current sensor data, from the at least one sensor 104, associated with the physical environment to create a snapshot of sensor measurements for the physical environment, step S6, S26. The thus generated snapshot of sensor measurements for the physical environment may be stored in an environment profile. The environment profile may be stored in the database 110. Such stored environment profiles may later be accessed by the control device 100 in order for the control device 100 to compare the at least one stored environment profile with a snapshot of sensor measurements for a current physical environment.

Then, the historical environmental states stored in the database 110 may be linked to the current snapshot data. The combined historical data and the current snapshot data may then be extrapolated to the future, thus providing a forecast of how the physical environment may change over time. Particularly, for this purpose, (processing unit 102 of the) control device 100 predicts, by combining the time line of sensor measurements with the snapshot of sensor measurements, future environmental conditions for the physical environment, step S8, S28. The historical and/or current sensor data may in particular relate to at least one tangible and/or intangible measurement. The at least one tangible measurement may be indicative of the number and/or type of luminaires, furniture, computer equipment and/or windows. The at least one intangible measurement may be indicative of noise level, audio level, light level, temperature, air quality, humidity, and/or air conditioning level. The values of the tangible and intangible measurements may be stored as values in a matrix (or vector) for each physical environment.

The predicted future environmental conditions could be linked to recommender systems and room reservation systems, so that employees can see in advance if a meeting room is a suitable location for their needs. Likewise, the predicted future environmental conditions could be directly set off against at least one activity. Particularly, in order to set off the predicted future environmental conditions against at least one activity, the (processing unit 102 of the) control device 100 correlates the predicted future environmental conditions with data pertaining to the at least one activity, step S10, S30.

The correlation may be performed as a matrix (or vector) correlation. For example, as noted above, each room in a building (wherein each room corresponds to a respective physical environment) could be represented by a matrix (or vector) of historical and current sensor data measured for the room. Similarly, each activity could be represented by values of a number of settings pertaining to tangible and intangible aspects. These values could in turn be represented by a matrix (or vector). Then, the matrix (or vector) representing the sensor data could be correlated with the matrix (or vector) representing the activity, wherein the correlation result provides an indication of the suitability.

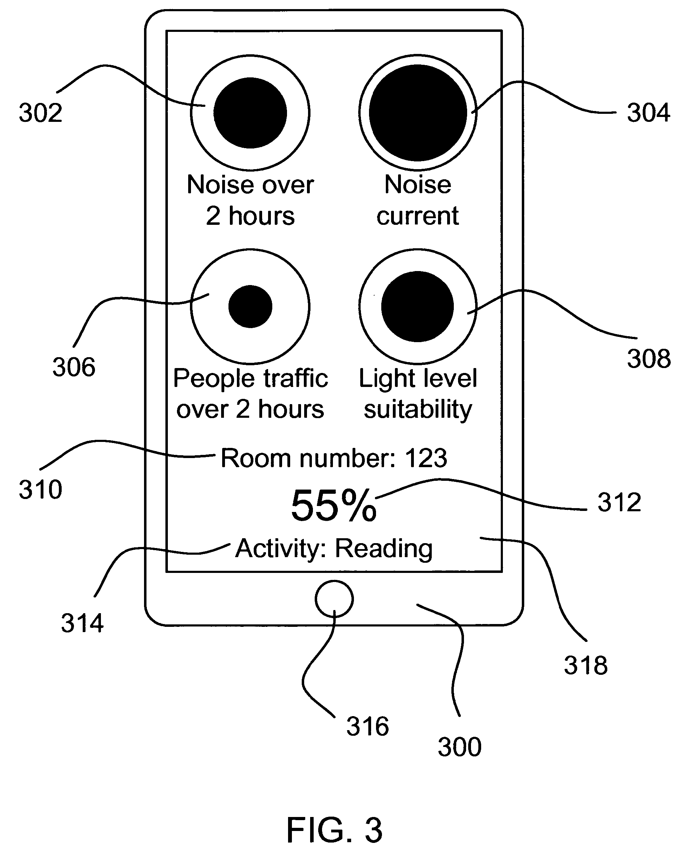

Values in the matrices (or vectors) could be scalable, weighted, or have different details levels. For example, a first representation could include average values throughout a period of one day, whereas a second representation being more detailed than the first representation could include average values for each hour. Properties such as scaling, weighting, or different details levels may be applied to both the sensor matrix (or vector) and the preference/activity matrix (or vector). Feedback in this respect could be timed, thereby enabling the control device 100 to provide the recommendation that a certain physical environment (say, "Room number: 123") will be suitable for a certain activity (say, "Activity: Reading") for two hours or in two hours, see Fig. 3 and the description thereof.

In addition, personal preferences (instantaneously generated or previously stored) do not have to be associated with a particular activity. For example, a user may have preferences for a higher than average light level because of problems with his eyesight, which will be an additional prerequisite irrespective of the user's (planned) activity. Such personal preferences may for example be stored in the database 110 or in the user device 112 and be accessible by the control device 100. Further, after spending a few hours in a particular environment, the user could record or otherwise mark some or all properties of this environment as most suitable for a specific activity. The combination of properties and activity may be stored in the database 110 or in the user device 112 and be accessible by the control device 100 and taken into consideration by the control device when performing correlations. Hence, the next time the user looks for an area for the same specific activity, physical environments that are very similar (i.e. having similar tangible and/or intangible properties) to the recorded environment may show a high level of correlation. Thus, the control device 100 may be arranged to receive such recording or markings and take them into consideration when performing the correlation.

Information resulting from the correlation could be provided in a meaningful and timely manner to the people who have expressed an interest in or need to know such information. Particularly, the information may be provided to a display 116. The display 116 may be part of the control device 100 or it may be operatively coupled to the control device 100. Particularly, for this purpose, if the control device 100 receives user input relating to at least one activity, it may provide a result of the correlation to a user interface so as to provide a recommendation for the at least one physical environment for the at least one activity, step S12. Likewise, if the control device 100 receives user input relating to a physical environment, it may provide a result of the correlation to a user interface so as to provide a recommendation for the at least one activity in the physical environment, step S32. Thus, based on collected historical data and snapshot data, the control device attempts to predict the appropriateness of the physical environment for a particular user - defined activity. The control device may then act as a dynamic recommender by remaining in a constant monitoring loop for monitoring the incoming data streams and thus update the recommendation in real time for the users. The system could also work in reverse, i.e. rather than the employee providing a preferred activity, the system could suggest, based on the data mined, what activities are suited for this area in its current state. In addition, the system can provide an overview of the activities currently undertaken and planned by people present in the environment.

The system of Fig. 2 is similar to the system of Fig. 1 as disclosed above. The system of Fig. 2 comprises a plurality of sensors 104 arranged to sense data from the physical environment in which they are located and to (locally) store the sensed data. The system further comprises a plurality of infrastructure elements 106 representing further actuators and devices producing output. A network 108 may be used by the plurality of sensors 104 and the plurality of infrastructure elements 106 to broadcast their presence, status, and/or produced data to other devices. For example, status and/or produced data may be stored in the common database 110a. Information may also be provided to the system from (personal) user devices 112. Accessed historical sensor data may be stored in a database 110. The database 110 may be part of the control device 100 or it may be operatively coupled to the control device 100.

As in Fig. 1, the system of Fig. 2 also comprises a control device 100 comprising a processing unit 102. In the case that data from the plurality of sensors 104 and from the plurality of infrastructure elements 106 is stored in the database 110a, the processing unit 102 can directly access the data in the database 110a without accessing the plurality of sensors 104 or the plurality of infrastructure elements 106 themselves.

Further, as noted above, the control device 100 may be a central server device or a personal device, such as a mobile phone. The (processing unit 102 of the) control device 100 may access a computer program product (114) which comprises software instructions to perform a functionality of the control device 100. The software instructions may be stored on a non-volatile storage medium which may be an integral part of the control device 100 or they may be operatively coupled to the control device 100. Information generated by the control device 100 may be provided to a display 116. The display 116 may be part of the control device 100 or it may be operatively coupled to the control device 100.

The processing and analysis as disclosed above with reference to the flowchart of Fig. 4 may be completed in the control device 100. For example, if a new sensor 104 is added to the system (e.g. a sensor that provides information about the number of people passing is installed), the new sensor does not have to be explicitly integrated into any network and can operate independently thereof as long as the control device 100 can harvest data stored on it. By virtue thereof, flexible and easily upgradable systems can be provided. When the user activates his or her personal control device 100, the control device 100 can connect to the sensors 104 and infrastructure elements 106 present in the vicinity of the control device 100 and gather the historical data. The control device 100 may, for example, connect to the sensors 104 and infrastructure elements 106 present in the vicinity of the control device 100 by means of infrared communications (such as IrDA communications), short-range radio communications (such as Bluetooth), or RFID communications (where the sensors 104 and infrastructure elements 106 have RFID tags and the control device 100 has an RFID tag reader). The embodiment of Fig. 2 does not require the user to send any personal information (e.g. preferences) to the system except authentication, thus preserving privacy.

Consequently, processing and collecting of data can be performed on different devices (e.g. a personal control device, a central server for the sensor infrastructure, or on every sensor separately). The data is then matched with the activity chosen and personal preferences and recommendations can be given.

Fig. 3 illustrates a user interface of a control device 300 according to embodiments. The control device 300 is similar to the control device 100 of Fig. 1 and Fig. 2. The control device 100 comprises means 316 for receiving user input and means 318 for displaying output. The means 316 for receiving user input may be an actuator, a button, or the like. The means 318 for displaying output may be a display. The display may be touch-sensitive, so that the control device 300 can receive user input by user interaction with the display 318.

In the illustrative example of Fig. 3, the suitability for an activity denoted "Activity: Reading" illustrated at reference numeral 314 has been calculated for a physical environment denoted "Room number: 123" as illustrated at reference numeral 310. A filtration algorithm may be used, so that the information may be displayed on, for example, a graphical user interface, in an easy to understand format. In the illustrative example of Fig. 3, a filtration algorithm has been applied which results in one general aspect and four specific aspects relating to the suitability for the activity "Reading" in the physical environment "Room number: 123". The general aspect as illustrated at reference numeral 312 indicates that the activity "Reading" in the physical environment "Room number: 123" is associated with a general recommendation of "55%". The four specific aspects relate to the properties "Noise in 2 hours" at reference numeral 302, "Noise current" at reference numeral 304, "People traffic in 2 hours" at reference numeral 306, and "Light level suitability" at reference numeral 308 for the physical environment. In the illustrative example of Fig. 3, the resulting value of the general aspect is indicated as a percentage, whereas the resulting values of the specific aspects are indicated as semi-filled circles, where the amount of filling (black) indicates the suitability for the activity in relation to the respective specific aspects. However, other specific aspects and ways to illustrate the same are equally possible. Also, the user interface may list more than one activity and/or more than one physical environment.

In order for the control device 300 to provide a recommendation for the physical environment "Room number: 123" for the at least one activity "Activity: Reading", or to provide a recommendation for the activity "Activity: Reading" in the physical environment "Room number: 123", the control device 300 has performed processing and analysis as disclosed above with reference to the flowchart of Fig. 4. User input with respect to "Room number: 123" and/or "Activity: Reading" may thus have been received by the control device 300 in order for the control device 300 to provide correlation results pertaining to the four specific aspects and the one general aspect.

As noted above, the control device may be a mobile phone. A computer program product comprising software instructions may thus be provided in the form of application software which may be downloaded to the control device 300 from a server. When executed on the control device 300, the application software thus collects historical and current sensor data in order to calculate a recommendation. Alternatively, the application software may access a central server at which the calculations and data gathering may be performed.

The person skilled in the art will realize that the present invention is by no means limited to the preferred embodiments described above. On the contrary, many modifications and variations are possible within the scope of the appended claims. The present invention can for example be extended to other spaces that are (or can readily be) provided with a network of data mining sensors, such as waiting areas, public outdoor spaces, in order to find a quiet spot in an airport or avoid crowded spaces in a public park. Moreover, although the disclosed embodiments have been given in an office domain context, other domains may also be of interest for the present invention, such as hospitality or retail where a visual merchandiser can easily see whether or not the lighting infrastructure can render a particular scene for a shop window display.

## Claims

1. A control device (100, 300) for providing an indication of suitability of at least one physical environment for an activity, based on at least one tangible and at least one intangible aspect of the at least one physical environment and the activity, wherein the at least one tangible aspect relates to infrastructure elements and the at least one intangible aspect relates to an atmosphere, which control device is arranged to
receive user input relating to an activity, the activity represented by settings pertaining to at least one tangible and at least one intangible aspect thereof;
access historical sensor data related to the at least one physical environment, the historical sensor data comprising historical sensor data related to at least one intangible aspect from at least one sensor associated with the at least one physical environment and historical presence and/or status data related to at least one tangible aspect associated with the at least one physical environment, to create a time line of sensor measurements for the at least one physical environment;
receive current sensor data related to the at least one physical environment, the current sensor data comprising current sensor data related to at least one intangible aspect from the at least one sensor associated with the at least one physical environment and current presence and/or status data related to at least one tangible aspect associated with the at least one physical environment, to create a snapshot of sensor measurements for the at least one physical environment;
predict, by combining the time line of sensor measurements with the snapshot of sensor measurements and extrapolating the combined historical sensor data and the snapshot of sensor measurements to the future, future environmental conditions for the at least one physical environment;
correlate the predicted future environmental conditions with data pertaining to the at least one tangible and the at least one intangible aspect of the activity; and
provide a result of the correlation to a user interface so as to provide the indication of suitability of the at least one physical environment for the activity.

2. A control device (100, 300) for providing an indication of suitability of at least one activity in a physical environment, based on at least one tangible and at least one intangible aspect of the at least one activity and the at least one environment, wherein the at least one tangible aspect relates to infrastructure elements and the at least one intangible aspect relates to an atmosphere, which control device is arranged to
receive user input relating to a physical environment;
access historical sensor data related to the at least one physical environment, the historical sensor data comprising historical sensor data related to at least one intangible aspect from at least one sensor associated with the physical environment and historical presence and/or status data related to at least one tangible aspect associated with the at least one physical environment, to create a time line of sensor measurements for the physical environment;
receive current sensor data related to the at least one physical environment, the current sensor data comprising current sensor data related to at least one intangible aspect from the at least one sensor associated with the physical environment and current presence and/or status data related to at least one tangible aspect associated with the at least one physical environment, to create a snapshot of sensor measurements for the physical environment;
predict, by combining the time line of sensor measurements with the snapshot of sensor measurements and extrapolating the combined historical sensor data and the snapshot of sensor measurements to the future, future environmental conditions for the physical environment;
correlate the predicted future environmental conditions with data pertaining to at least one tangible and at least one intangible aspect of at least one activity; and
provide a result of the correlation to a user interface so as to provide the indication of suitability of the at least one activity in the physical environment.

3. The control device according to claim 1 or 2, wherein the user interface is an integrated part of the control device.

4. The control device according to claim 1 or 2, wherein the control device is a mobile phone.

5. The control device according to claim 1 or 2, wherein the presence and/or status data is indicative of a presence and/or status of a lighting infrastructure, an audio output device, a visual output device, a scent producing device, an air conditioning device, an air filtration device and/or a sound masking/dampening device, and wherein the at least one sensor data is indicative of noise level, audio level, light level, temperature, air quality, humidity, and/or air conditioning level.

6. The control device according to claim 1 or 2, further arranged to receive manually inputted user input relating to the physical environment and/or the activity.

7. The control device according to claim 1 or 2, further arranged to store the snapshot of sensor measurements for the physical environment in an environment profile.

8. The control device according to claim 7, further arranged to access the at least one, stored, environment profile and compare the at least one, stored, environment profile with a snapshot of sensor measurements for a current physical environment.

9. The control device according to claim 1 or 2, wherein the activity is associated with a calendar item.

10. The control device according to claim 9, wherein the calendar item is an appointment item, meeting item, or event item.

11. The control device according to claim 9 or 10, further arranged to access at least one tangible and the at least one intangible aspect associated with at least one further calendar item and provide an indication of suitability of the at least one physical environment for the at least one further calendar item to the user interface.

12. A method of providing an indication of suitability of at least one physical environment for an activity, based on at least one tangible and at least one intangible aspect of the at least one physical environment and the activity, wherein the at least one tangible aspect relates to infrastructure elements and the at least one intangible aspect relates to an atmosphere, the method comprising
receiving (S2) user input relating to an activity, the activity represented by settings pertaining to at least one tangible and at least one intangible aspect thereof;
accessing (S4) historical sensor data related to the at least one physical environment, the historical sensor data comprising historical sensor data related to at least one intangible aspect from at least one sensor associated with the at least one physical environment and historical presence and/or status data related to at least one tangible aspect associated with the at least one physical environment, to create a time line of sensor measurements for the at least one physical environment;
receiving (S6) current sensor data related to the at least one physical environment, the current sensor data comprising current sensor data related to at least one intangible aspect from the at least one sensor associated with the at least one physical environment and current presence and/or status data related to at least one tangible aspect associated with the at least one physical environment, to create a snapshot of sensor measurements for the at least one physical environment;
predicting (S8), by combining the time line of sensor measurements with the snapshot of sensor measurements and extrapolating the combined historical sensor data and the snapshot of sensor measurements to the future, future environmental conditions for the at least one physical environment;
correlating (S10) the predicted future environmental conditions with data pertaining to the at least one tangible and at least one intangible aspect of the activity; and
providing (S12) a result of the correlation to a user interface so as to provide the indication of suitability of the at least one physical environment for the activity.

13. A method of providing an indication of suitability of at least one activity in a physical environment, based on at least one tangible and at least one intangible aspect of the at least one activity and the at least one environment, wherein the at least one tangible aspect relates to infrastructure elements and the at least one intangible aspect relates to an atmosphere, the method comprising
receiving (S22) user input relating to a physical environment;
accessing (S24) historical sensor data related to the at least one physical environment, the historical sensor data comprising historical sensor data related to at least one intangible aspect from at least one sensor associated with the physical environment and historical presence and/or status data related to at least one tangible aspect associated with the at least one physical environment, to create a time line of sensor measurements for the physical environment;
receiving (S26) current sensor data related to the at least one physical environment, the current sensor data comprising current sensor data related to at least one intangible aspect from the at least one sensor associated with the physical environment and current presence and/or status data related to at least one tangible aspect associated with the at least one physical environment, to create a snapshot of sensor measurements for the physical environment;
predicting (S28), by combining the time line of sensor measurements with the snapshot of sensor measurements and extrapolating the combined historical sensor data and the snapshot of sensor measurements to the future, future environmental conditions for the physical environment;
correlating (S30) the predicted future environmental conditions with data pertaining to at least one tangible and at least one intangible aspect of at least one activity; and
providing (S32) a result of the correlation to a user interface so as to provide the indication of suitability of the at least one activity in the physical environment.

14. A computer program product (114) stored on a non-volatile storage medium and comprising software instructions which, when executed on a processor, cause the processor to perform a method according to claim 12 and/or 13.

## Patentansprüche

1. Steuereinrichtung (100, 300), um, aufgrund von mindestens einem greifbaren und mindestens einem nicht greifbaren Aspekt der mindestens einen physikalischen Umgebung und der Aktivität, eine Angabe einer Eignung von mindestens einer physikalischen Umgebung für eine Aktivität vorzusehen, wobei der mindestens eine greifbare Aspekt auf Infrastrukturelemente bezogen ist und der mindestens eine nichtgreifbare Aspekt auf eine Atmosphäre bezogen ist, wobei die Steuereinrichtung so eingerichtet ist, dass sie:
eine auf eine Aktivität bezogene Benutzereingabe empfängt, wobei die durch Einstellungen dargestellte Aktivität mindestens einen greifbaren und mindestens einen nicht-greifbaren Aspekt derselben betrifft;
auf historische Sensordaten zugreift, die auf die mindestens eine physikalische Umgebung bezogen sind, wobei die historischen Sensordaten von mindestens einem Sensor historische Sensordaten, die auf mindestens einen nicht-greifbaren Aspekt bezogen sind, der der mindestens einen physikalischen Umgebung zugeordnet ist, sowie historische Präsenz- und/oder Statusdaten umfassen, die auf mindestens einen greifbaren Aspekt bezogen sind, der der mindestens einen physikalischen Umgebung zugeordnet ist, um eine Time-Line von Sensormessungen für die mindestens eine physikalische Umgebung zu erzeugen;
aktuelle Sensordaten empfängt, die auf die mindestens eine physikalische Umgebung bezogen sind, wobei die aktuellen Sensordaten von dem mindestens einen Sensor aktuelle Sensordaten, die auf mindestens einen nicht-greifbaren Aspekt bezogen sind, der der mindestens einen physikalischen Umgebung zugeordnet ist, sowie aktuelle Präsenz- und/oder Statusdaten umfassen, die auf mindestens einen greifbaren Aspekt bezogen sind, der der mindestens einen physikalischen Umgebung zugeordnet ist, um einen Snapshot von Sensormessungen für die mindestens eine physikalische Umgebung zu erzeugen;
durch Kombinieren der Time-Line von Sensormessungen mit dem Snapshot von Sensormessungen und Extrapolieren der kombinierten historischen Sensordaten und des Snapshots von Sensormessungen in die Zukunft künftige Umgebungsbedingungen für die mindestens eine physikalische Umgebung prognostiziert;
die prognostizierten, künftigen Umgebungsbedingungen Daten zuordnet, die den mindestens einen greifbaren und den mindestens einen nicht-greifbaren Aspekt der Aktivität betreffen; und
ein Ergebnis der Korrelation einer Benutzeroberfläche zuführt, um die Angabe einer Eignung der mindestens einen physikalischen Umgebung für die Aktivität vorzusehen.

2. Steuereinrichtung (100, 300), um, aufgrund von mindestens einem greifbaren und mindestens einem nicht greifbaren Aspekt der mindestens einen Aktivität und der mindestens einen Umgebung, eine Angabe einer Eignung von mindestens einer Aktivität in einer physikalischen Umgebung vorzusehen, wobei der mindestens eine greifbare Aspekt auf Infrastrukturelemente bezogen ist und der mindestens eine nichtgreifbare Aspekt auf eine Atmosphäre bezogen ist, wobei die Steuereinrichtung so eingerichtet ist, dass sie:
eine Benutzereingabe empfängt, die auf eine physikalische Umgebung bezogen ist;
auf historische Sensordaten zugreift, die auf die mindestens eine physikalische Umgebung bezogen sind, wobei die historischen Sensordaten von mindestens einem Sensor historische Sensordaten, die auf mindestens einen nicht-greifbaren Aspekt bezogen sind, der der physikalischen Umgebung zugeordnet ist, sowie historische Präsenz- und/oder Statusdaten umfassen, die auf mindestens einen der mindestens einen physikalischen Umgebung zugeordneten greifbaren Aspekt bezogen sind, um eine Time-Line von Sensormessungen für die physikalische Umgebung zu erzeugen;
aktuelle, auf die mindestens eine physikalische Umgebung bezogene Sensordaten empfängt, wobei die aktuellen Sensordaten von dem mindestens einen Sensor aktuelle Sensordaten, die auf mindestens einen nicht-greifbaren Aspekt bezogen sind, der der physikalischen Umgebung zugeordnet ist, sowie aktuelle Präsenz- und/oder Statusdaten umfassen, die auf mindestens einen der mindestens einen physikalischen Umgebung zugeordneten greifbaren Aspekt bezogen sind, um einen Snapshot von Sensormessungen für die physikalische Umgebung zu erzeugen;
durch Kombinieren der Time-Line von Sensormessungen mit dem Snapshot von Sensormessungen und Extrapolieren der kombinierten historischen Sensordaten und des Snapshots von Sensormessungen in die Zukunft künftige Umgebungsbedingungen für die mindestens eine physikalische Umgebung prognostiziert;
die prognostizierten, künftigen Umgebungsbedingungen Daten zuordnet, die den mindestens einen greifbaren und den mindestens einen nicht-greifbaren Aspekt von mindestens einer Aktivität betreffen; und
ein Ergebnis der Korrelation einer Benutzeroberfläche zuführt, um die Angabe einer Eignung der mindestens einen Aktivität in der physikalischen Umgebung vorzusehen.

3. Steuereinrichtung nach Anspruch 1 oder 2" wobei die Benutzeroberfläche ein integrierter Teil der Steuereinrichtung ist.

4. Steuereinrichtung nach Anspruch 1 oder 2, wobei die Steuereinrichtung ein Mobiltelefon ist.

5. Steuereinrichtung nach Anspruch 1 oder 2, wobei die Präsenz- und/oder Statusdaten auf ein Vorhandensein und/oder einen Status einer Beleuchtungsinfrastruktur, einer Audioausgangseinrichtung, einer Bildausgabeeinrichtung, einer Dufterzeugungseinrichtung, einer Klimatisierungseinrichtung, einer Luftfilterungseinrichtung und/oder einer Geräuschmaskierungs-/Dämpfungseinrichtung schließen lassen, und wobei die mindestens einen Sensordaten für einen Geräuschpegel, einen Audio-Level, eine Lichtintensität, einen Temperaturpegel, ein Luftqualitätsniveau, einen Feuchtigkeitspegel und/oder ein Klimatisierungsniveau bezeichnend sind.

6. Steuereinrichtung nach Anspruch 1 oder 2, die weiterhin so eingerichtet ist, dass sie manuell eingegebene Benutzereingaben empfängt, die auf die physikalische Umgebung und/oder die Aktivität bezogen sind.

7. Steuereinrichtung nach Anspruch 1 oder 2, die weiterhin so eingerichtet ist, dass sie den Snapshot von Sensormessungen für die physikalische Umgebung in einem Umgebungsprofil speichert.

8. Steuereinrichtung nach Anspruch 7, die weiterhin so eingerichtet ist, dass sie auf das mindestens eine gespeicherte Umgebungsprofil zugreift und das mindestens eine gespeicherte Umgebungsprofil mit einem Snapshot von Sensormessungen für eine aktuelle physikalische Umgebung vergleicht.

9. Steuereinrichtung nach Anspruch 1 oder 2, wobei die Aktivität einem Kalendereintrag zugeordnet wird.

10. Steuereinrichtung nach Anspruch 9, wobei der Kalendereintrag ein Verabredungseintrag, ein Meetingeintrag oder ein Eventeintrag ist.

11. Steuereinrichtung nach Anspruch 9 oder 10, die weiterhin so eingerichtet ist, dass sie auf mindestens einen greifbaren und den mindestens einen nicht-greifbaren Aspekt zugreift, der mindestens einem weiteren Kalendereintrag zugeordnet ist, und eine Angabe der Eignung der mindestens einen physikalischen Umgebung für den mindestens einen weiteren Kalendereintrag der Benutzeroberfläche zuführt.

12. Verfahren, um, aufgrund von mindestens einem greifbaren und mindestens einem nicht greifbaren Aspekt der mindestens einen physikalischen Umgebung und der Aktivität, eine Angabe einer Eignung von mindestens einer physikalischen Umgebung für eine Aktivität vorzusehen, wobei der mindestens eine greifbare Aspekt auf Infrastrukturelemente bezogen ist und der mindestens eine nichtgreifbare Aspekt auf eine Atmosphäre bezogen ist, wobei das Verfahren die folgenden Schritte umfasst, wonach:
eine auf eine Aktivität bezogene Benutzereingabe empfangen wird (S2), wobei die durch Einstellungen dargestellte Aktivität mindestens einen greifbaren und mindestens einen nicht-greifbaren Aspekt derselben betrifft;
auf historische Sensordaten zugegriffen wird (S4), die auf die mindestens eine physikalische Umgebung bezogen sind, wobei die historischen Sensordaten von mindestens einem Sensor historische Sensordaten, die auf mindestens einen nichtgreifbaren Aspekt bezogen sind, der der mindestens einen physikalischen Umgebung zugeordnet ist, sowie historische Präsenz- und/oder Statusdaten umfassen, die auf mindestens einen greifbaren Aspekt bezogen sind, der der mindestens einen physikalischen Umgebung zugeordnet ist, um eine Time-Line von Sensormessungen für die mindestens eine physikalische Umgebung zu erzeugen;
aktuelle Sensordaten empfangen werden (S6), die auf die mindestens eine physikalische Umgebung bezogen sind, wobei die aktuellen Sensordaten von dem mindestens einen Sensor aktuelle Sensordaten, die auf mindestens einen nicht-greifbaren Aspekt bezogen sind, der der mindestens einen physikalischen Umgebung zugeordnet ist, sowie aktuelle Präsenz- und/oder Statusdaten umfassen, die auf mindestens einen greifbaren Aspekt bezogen sind, der der mindestens einen physikalischen Umgebung zugeordnet ist, um einen Snapshot von Sensormessungen für die mindestens eine physikalische Umgebung zu erzeugen;
durch Kombinieren der Time-Line von Sensormessungen mit dem Snapshot von Sensormessungen und Extrapolieren der kombinierten historischen Sensordaten und des Snapshots von Sensormessungen in die Zukunft künftige Umgebungsbedingungen für die mindestens eine physikalische Umgebung prognostiziert werden (S8);
die prognostizierten, künftigen Umgebungsbedingungen Daten zugeordnet werden (S10), die den mindestens einen greifbaren und den mindestens einen nichtgreifbaren Aspekt der Aktivität betreffen; und
ein Ergebnis der Korrelation einer Benutzeroberfläche zugeführt wird (S12), um die Angabe einer Eignung der mindestens einen physikalischen Umgebung für die Aktivität vorzusehen.

13. Verfahren, um, aufgrund von mindestens einem greifbaren und mindestens einem nicht greifbaren Aspekt der mindestens einen Aktivität und der mindestens einen Umgebung, eine Angabe einer Eignung von mindestens einer Aktivität in einer physikalischen Umgebung vorzusehen, wobei der mindestens eine greifbare Aspekt auf Infrastrukturelemente bezogen ist und der mindestens eine nicht-greifbare Aspekt auf eine Atmosphäre bezogen ist, wobei das Verfahren die folgenden Schritte umfasst, wonach:
eine Benutzereingabe empfangen wird (S22), die auf eine physikalische Umgebung bezogen ist;
auf historische Sensordaten zugegriffen wird (S24), die auf die mindestens eine physikalische Umgebung bezogen sind, wobei die historischen Sensordaten von mindestens einem Sensor historische Sensordaten, die auf mindestens einen nichtgreifbaren Aspekt bezogen sind, der der physikalischen Umgebung zugeordnet ist, sowie historische Präsenz- und/oder Statusdaten umfassen, die auf mindestens einen der mindestens einen physikalischen Umgebung zugeordneten greifbaren Aspekt bezogen sind, um eine Time-Line von Sensormessungen für die physikalische Umgebung zu erzeugen;
aktuelle, auf die mindestens eine physikalische Umgebung bezogene Sensordaten empfangen werden (S26), wobei die aktuellen Sensordaten von dem mindestens einen Sensor aktuelle Sensordaten, die auf mindestens einen nicht-greifbaren Aspekt bezogen sind, der der physikalischen Umgebung zugeordnet ist, sowie aktuelle Präsenz- und/oder Statusdaten umfassen, die auf mindestens einen der mindestens einen physikalischen Umgebung zugeordneten greifbaren Aspekt bezogen sind, um einen Snapshot von Sensormessungen für die physikalische Umgebung zu erzeugen;
durch Kombinieren der Time-Line von Sensormessungen mit dem Snapshot von Sensormessungen und Extrapolieren der kombinierten historischen Sensordaten und des Snapshots von Sensormessungen in die Zukunft künftige Umgebungsbedingungen für die mindestens eine physikalische Umgebung prognostiziert werden (S28);
die prognostizierten, künftigen Umgebungsbedingungen Daten zugeordnet werden (S30), die den mindestens einen greifbaren und den mindestens einen nichtgreifbaren Aspekt von mindestens einer Aktivität betreffen; und
ein Ergebnis der Korrelation einer Benutzeroberfläche zugeführt wird (S32), um die Angabe einer Eignung der mindestens einen Aktivität in der physikalischen Umgebung vorzusehen.

14. Computerprogrammprodukt (114), das auf einen nicht-flüchtigen Speichermedium gespeichert ist und Software-Anweisungen umfasst, die bei Ausführung auf einem Prozessor bewirken, dass der Prozessor ein Verfahren nach Anspruch 12 und/oder 13 ausführt.

## Revendications

1. Dispositif de commande (100, 300) pour fournir une indication de caractère approprié d'au moins un environnement physique pour une activité, en fonction d'au moins un aspect tangible et d'au moins un aspect intangible de l'au moins un environnement physique et de l'activité, dans lequel l'au moins un aspect tangible est connexe à des éléments d'infrastructure et l'au moins un aspect intangible est connexe à une atmosphère, lequel dispositif de commande est agencé pour :
recevoir une entrée utilisateur concernant une activité, l'activité étant représentée par des réglages se rapportant à au moins un aspect tangible et au moins un aspect intangible de celle-ci ;
accéder à des données de capteur historiques connexes à l'au moins un environnement physique, les données de capteur historiques comprenant des données de capteur historiques connexes à au moins un aspect intangible à partir d'au moins un capteur associé à l'au moins un environnement physique et des données de présence et/ou d'état historiques connexes à au moins un aspect tangible associé à l'au moins un environnement physique, pour créer une chronologie de mesures de capteur pour l'au moins un environnement physique ;
recevoir des données de capteur actuelles connexes à l'au moins un environnement physique, les données de capteur actuelles comprenant des données de capteur actuelles connexes à au moins un aspect intangible à partir de l'au moins un capteur associé à l'au moins un environnement physique et des données de présence et/ou d'état actuelles connexes à au moins un aspect tangible associé à l'au moins un environnement physique, pour créer un aperçu de mesures de capteur pour l'au moins un environnement physique ;
prédire, en combinant la chronologie de mesures de capteur avec l'aperçu de mesures de capteur et en extrapolant les données de capteur historiques combinées et l'aperçu de mesures de capteur par rapport au futur, des conditions environnementales futures pour l'au moins un environnement physique ;
corréler les conditions environnementales futures prédites avec des données se rapportant à l'au moins un aspect tangible et à l'au moins un aspect intangible de l'activité ; et
fournir un résultat de la corrélation à une interface utilisateur afin de fournir l'indication de caractère approprié de l'au moins un environnement physique pour l'activité.

2. Dispositif de commande (100, 300) pour fournir une indication de caractère approprié d'au moins une activité dans un environnement physique, en fonction d'au moins un aspect tangible et d'au moins un aspect intangible de l'au moins une activité et de l'au moins un environnement, dans lequel l'au moins un aspect tangible est connexe à des éléments d'infrastructure et l'au moins un aspect intangible est connexe à une atmosphère, lequel dispositif de commande est agencé pour :
recevoir unes entrée utilisateur concernant un environnement physique ;
accéder à des données de capteur historiques connexes à l'au moins un environnement physique, les données de capteur historiques comprenant des données de capteur historiques connexes à au moins un aspect intangible à partir d'au moins un capteur associé à l'environnement physique et des données de présence et/ou d'état historiques connexes à au moins un aspect tangible associé à l'au moins un environnement physique, pour créer une chronologie de mesures de capteur pour l'environnement physique ;
recevoir des données de capteur actuelles connexes à l'au moins un environnement physique, les données de capteur actuelles comprenant des données de capteur actuelles connexes à au moins un aspect intangible à partir de l'au moins un capteur associé à l'environnement physique et des données de présence et/ou d'état actuelles connexes à au moins un aspect tangible associé à l'au moins un environnement physique, pour créer un aperçu de mesures de capteur pour l'environnement physique ;
prédire, en combinant la chronologie de mesures de capteur avec l'aperçu de mesures de capteur et en extrapolant les données de capteur historiques combinées et l'aperçu de mesures de capteur par rapport au futur, des conditions environnementales futures pour l'environnement physique ;
corréler les conditions environnementales futures prédites avec des données se rapportant à au moins un aspect tangible et au moins un aspect intangible d'au moins une activité ; et
fournir un résultat de la corrélation à une interface utilisateur afin de fournir l'indication de caractère approprié de l'au moins une activité dans l'environnement physique.

3. Dispositif de commande selon la revendication 1 ou 2, dans lequel l'interface utilisateur est une partie intégrée du dispositif de commande.

4. Dispositif de commande selon la revendication 1 ou 2, dans lequel le dispositif de commande est un téléphone mobile.

5. Dispositif de commande selon la revendication 1 ou 2, dans lequel les données de présence et/ou d'état sont indicatives d'une présence et/ou d'un état d'une infrastructure d'éclairage, d'un dispositif de sortie audio, d'un dispositif de sortie visuel, d'un dispositif de production de parfum, d'un dispositif de climatisation, d'un dispositif de filtration d'air et/ou d'un dispositif de masquage de son/d'insonorisation, et dans lequel les données d'au moins un capteur sont indicatives de niveau de bruit, de niveau audio, de niveau de lumière, de température, de qualité d'air, d'humidité, et/ou de niveau de climatisation.

6. Dispositif de commande selon la revendication 1 ou 2, agencé en outre pour recevoir une entrée utilisateur entrée manuellement concernant l'environnement physique et/ou l'activité.

7. Dispositif de commande selon la revendication 1 ou 2, agencé en outre pour stocker l'aperçu de mesures de capteur pour l'environnement physique dans un profil d'environnement.

8. Dispositif de commande selon la revendication 7, agencé en outre pour accéder à l'au moins un profil d'environnement, stocké, et comparer l'au moins un profil d'environnement, stocké, à un aperçu de mesures de capteur pour un environnement physique actuel.

9. Dispositif de commande selon la revendication 1 ou 2, dans lequel l'activité est associée à un article de calendrier.

10. Dispositif de commande selon la revendication 9, dans lequel l'article de calendrier est un article de rendez-vous, un article de réunion, ou un article d'événement.

11. Dispositif de commande selon la revendication 9 ou 10, agencé en outre pour accéder à au moins un aspect tangible et l'au moins un aspect intangible associés à au moins un article de calendrier supplémentaire et fournir une indication de caractère approprié de l'au moins un environnement physique pour l'au moins un article de calendrier supplémentaire à l'interface utilisateur.

12. Procédé de fourniture d'une indication de caractère approprié d'au moins un environnement physique pour une activité, en fonction d'au moins un aspect tangible et d'au moins un aspect intangible de l'au moins un environnement physique et de l'activité, dans lequel l'au moins un aspect tangible est connexe à des éléments d'infrastructure et l'au moins un aspect intangible est connexe à une atmosphère, le procédé comprenant :
la réception (S2) d'une entrée utilisateur concernant une activité, l'activité étant représentée par des réglages se rapportant à au moins un aspect tangible et au moins un aspect intangible de celle-ci ;
l'accès (S4) à des données de capteur historiques connexes à l'au moins un environnement physique, les données de capteur historiques comprenant des données de capteur historiques connexes à au moins un aspect intangible à partir d'au moins un capteur associé à l'au moins un environnement physique et des données de présence et/ou d'état historiques connexes à au moins un aspect tangible associé à l'au moins un environnement physique, pour créer une chronologie de mesures de capteur pour l'au moins un environnement physique ;
la réception (S6) de données de capteur actuelles connexes à l'au moins un environnement physique, les données de capteur actuelles comprenant des données de capteur actuelles connexes à au moins un aspect intangible à partir de l'au moins un capteur associé à l'au moins un environnement physique et des données de présence et/ou d'état actuelles connexes à au moins un aspect tangible associé à l'au moins un environnement physique, pour créer un aperçu de mesures de capteur pour l'au moins un environnement physique ;
la prédiction (S8), en combinant la chronologie de mesures de capteur avec l'aperçu de mesures de capteur et en extrapolant les données de capteur historiques combinées et l'aperçu de mesures de capteur par rapport au futur, de conditions environnementales futures pour l'au moins un environnement physique ;
la corrélation (S 10) des conditions environnementales futures prédites avec des données se rapportant à l'au moins un tangible et au moins un aspect intangible de l'activité ; et
la fourniture (S12) d'un résultat de la corrélation à une interface utilisateur afin de fournir l'indication de caractère approprié de l'au moins un environnement physique pour l'activité.

13. Procédé de fourniture d'une indication de caractère approprié d'au moins une activité dans un environnement physique, en fonction d'au moins un aspect tangible et d'au moins un aspect intangible de l'au moins une activité et de l'au moins un environnement, dans lequel l'au moins un aspect tangible est connexe à des éléments d'infrastructure et l'au moins un aspect intangible est connexe à une atmosphère, le procédé comprenant :
la réception (S22) d'une entrée utilisateur concernant un environnement physique ;
l'accès (S24) à des données de capteur historiques connexes à l'au moins un environnement physique, les données de capteur historiques comprenant des données de capteur historiques connexes à au moins un aspect intangible à partir d'au moins un capteur associé à l'environnement physique et des données de présence et/ou d'état historiques connexes à au moins un aspect tangible associé à l'au moins un environnement physique, pour créer une chronologie de mesures de capteur pour l'environnement physique ;
la réception (S26) de données de capteur actuelles connexes à l'au moins un environnement physique, les données de capteur actuelles comprenant des données de capteur actuelles connexes à au moins un aspect intangible à partir de l'au moins un capteur associé à l'environnement physique et des données de présence et/ou d'état actuelles connexes à au moins un aspect tangible associé à l'au moins un environnement physique, pour créer un aperçu de mesures de capteur pour l'environnement physique ;
la prédiction (S28), en combinant la chronologie de mesures de capteur avec l'aperçu de mesures de capteur et en extrapolant les données de capteur historiques combinées et l'aperçu de mesures de capteur par rapport au futur, de conditions environnementales futures pour l'environnement physique ;
la corrélation (S30) des conditions environnementales futures prédites avec des données se rapportant à au moins un aspect tangible et au moins un aspect intangible d'au moins une activité ; et
la fourniture (S32) d'un résultat de la corrélation à une interface utilisateur afin de fournir l'indication de caractère approprié de l'au moins une activité dans l'environnement physique.

14. Produit programme d'ordinateur (114) stocké sur un support de stockage non volatil et comprenant des instructions logicielles qui, lorsqu'elles sont exécutées sur un processeur, font en sorte que le processeur réalise un procédé selon la revendication 12 et/ou 13.
